# EUROPEAN PATENT APPLICATION

(11) **EP 4 604 309 A1**
(43) Date of publication of application: **20.08.2025**
(21) Application number: 23880188.0
(22) Date of filing: 17.10.2023
(51) Int. Cl.: H01M 50/581, H01M 50/24, H01M 50/244, H01M 50/502, H01M 50/249

(54) **BATTERY PACK HAVING CURRENT-PASSING AND -BLOCKING UNIT**

(30) Priority: 18.10.2022 KR 20220134232
(71) Applicant: LG Energy Solution, Ltd., Seoul 07335 (KR)
(72) Inventor: LEE, Jung-Hoon, Daejeon 34122 (KR); PARK, Min-Soo, Daejeon 34122 (KR)
(74) Representative: Plasseraud IP
(86) International application number: PCT/KR2023/016073
(87) International publication number: WO 2024/085611

(57) **Abstract**

A battery pack according to the present disclosure includes a plurality of battery modules; a pack tray accommodating the battery modules and having an open top; a pack cover disposed on top of the pack tray to hermetically seal an accommodation space in which the battery modules are received; and an electrical connection disconnection portion disposed between the pack tray and the pack cover to electrically connect and support a module connection busbar connecting the battery modules, and separate the connection of the module connection busbar to disconnect the electrical connection between the battery modules when a thermal event occurs.

## Description

### TECHNICAL FIELD

The present disclosure relates to a battery pack.

The present application claims priority to Korean Patent Application No. 10-2022-0134232 filed on October 18, 2022 in the Republic of Korea, the disclosure of which is incorporated herein by reference.

### BACKGROUND ART

As opposed to primary batteries that cannot be used again after they are used once, secondary batteries convert electrical energy to chemical energy and can be recharged in a semi-permanent manner.

Secondary batteries include lithium secondary battery, nickel-cadmium (Ni-Cd) batteries, lead-acid batteries, nickel-hydrogen (Ni-MH) batteries, zinc-air batteries, alkaline-manganese batteries, etc. Among them, lead-acid batteries and lithium secondary batteries are the most popular secondary batteries.

In particular, lithium secondary batteries have high energy storage density, light weight, compact size, high safety, low discharge rate and long life, and due to these advantages, they are being widely used as electric car batteries in recent years. For reference, lithium secondary batteries are generally classified into cylindrical, prismatic and pouch type according to the shape, and have a wide range of applications including electric cars as well as energy storage systems (ESS) and other electric devices.

Currently, a lithium secondary battery cell has operating voltage of about 2.5V to 4.5V. Accordingly, to use secondary batteries as a source of energy for electric vehicles, lithium ion battery cells are connected in series and/or in parallel to form a battery module, and battery modules are connected in series and/or in parallel to form a battery pack.

On the other hand, since secondary batteries involve chemical reaction during charging and discharging, when they are used in higher temperature environments than the optimum temperature, performance degradation may occur, and in the case where thermal control to the optimal temperature fails, there are unexpected fire or explosion risks. Additionally, the battery module has a structure in which secondary batteries are densely packed in a module housing and battery modules are electrically connected to each other through a busbar.

Accordingly, when a thermal event occurs due to a fire triggered by any secondary battery, an internal short circuit occurs and the fire spread to other battery cell is accelerated.

Accordingly, when the thermal event occurs in the battery module, it is necessary to disconnect the electrical connection between adjacent other battery cells to prevent internal short circuits of normal battery modules and prevent heat propagation that causes the fire to spread all over the battery pack, thereby enhancing safety.

### SUMMARY

### Technical Problem

The present disclosure is designed to solve the above-described problem, and therefore the present disclosure is directed to providing a battery pack for ensuring safety and reliability when a thermal event occurs in a battery module and a vehicle comprising the same.

However, the technical problems to be solved by the present disclosure are not limited to the above-described problems, and these and other problems will be clearly understood by those skilled in the art from the following description.

### Technical Solution

To address the above-described problems, there is provided a battery pack including a plurality of battery modules; a pack tray accommodating the battery modules and having an open top; a pack cover disposed on top of the pack tray to hermetically seal an accommodation space in which the battery modules are received; and an electrical connection disconnection portion disposed between the pack tray and the pack cover to electrically connect and support a module connection busbar connecting the battery modules, and separate the connection of the module connection busbar to disconnect the electrical connection between the battery modules when a thermal event occurs.

The electrical connection disconnection portion may include a disconnection body to which a pair of module connection busbars are connected; a detachable member that is placed in an inner wall of the pack cover and separated when a temperature of the pack cover rises; a first elastic member having one end connected to the detachable member and the other end connected to a top of the disconnection body; and a second elastic member having one end connected to the pack tray and the other end connected to a bottom of the disconnection body.

The disconnection body may be located at an equilibrium height at which an elastic force of the first elastic member is equal to an elastic force of the second elastic member in the accommodation space, and the module connection busbars may electrically connect the battery modules at the equilibrium height.

The detachable member may melt and separate from the pack cover when the temperature of the pack cover rises.

Upon separation of the detachable member from the pack cover, as the disconnection body moves by the elastic force of the second elastic member, the electrical connection between the battery modules may be disconnected.

The pack tray may have a horizontal partition wall and a vertical partition wall to partition an inside of the pack tray, and the horizontal partition wall and the vertical partition wall may have an inward recessed groove portion to which one end of the second elastic member is coupled.

The detachable member may be made of a plastic material.

The disconnection body may be thicker than the module connection busbars.

The disconnection body may have a connection groove portion at two sides.

The inner wall of the pack cover may have an accommodation groove in which the detachable member is received.

The disconnection body may have a concave groove portion rounded inward along a thickness direction in each of an upper surface and a lower surface.

An inner wall of the connection groove portions may have a tapered portion such that an inner diameter increases from a center to two ends of the disconnection body.

According to another aspect of the present disclosure, here is provided a vehicle including the battery pack.

### Advantageous Effects

According to an aspect of the present disclosure, when a thermal event occurs due to a fire in any battery module, it may be possible to disconnect the electrical connection between adjacent other battery cells to prevent internal short circuits of normal battery modules and prevent heat propagation that causes the fire to spread all over the battery pack, thereby enhancing safety.

Additionally, it may be possible to prevent fire propagation between battery modules, thereby enhancing durability of the battery pack and reducing the maintenance and repair cost.

Additionally, with the simpler configuration design, in the event of fire in the pack, it may be possible to prevent electrical short circuits between battery modules and prevent explosive fire spread across the battery modules, thereby regulating explosive accumulation of thermal energy in the battery pack and preventing structure collapse of the battery pack.

The effects of the present disclosure are not limited to the above-described effects, and these and other effects will be clearly understood by those skilled in the art from the present disclosure and the accompanying drawings.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a schematic perspective view of a battery pack according to an embodiment of the present disclosure.
FIG. 2 is an exploded perspective view of the main components of the battery pack of FIG. 1.
FIG. 3 is a top view of FIG. 1 in which the pack cover is removed.
FIG. 4 is a vertical cross-sectional view of FIG. 3, taking along the line A-A.
FIG. 5 is a schematic perspective view of an electrical connection disconnection portion including a disconnection body and module connection busbars coupled to two sides according to an embodiment of the present disclosure.
FIG. 6 is a vertical cross-sectional view of FIG. 5, taken along a length direction.
FIG. 7 is a diagram showing separation of a detachable member in an electrical connection disconnection portion of a battery pack according to an embodiment of the present disclosure.
FIG. 8 is a diagram showing a disconnection body separated from module connection busbars in an electrical connection disconnection portion of a battery pack according to an embodiment of the present disclosure.
FIG. 9 is a schematic perspective view of a disconnection body according to another embodiment of the present disclosure.
FIG. 10 is a vertical cross-sectional view of FIG. 9.
FIG. 11 is a diagram showing a disconnection body separated from module connection busbars according to another embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

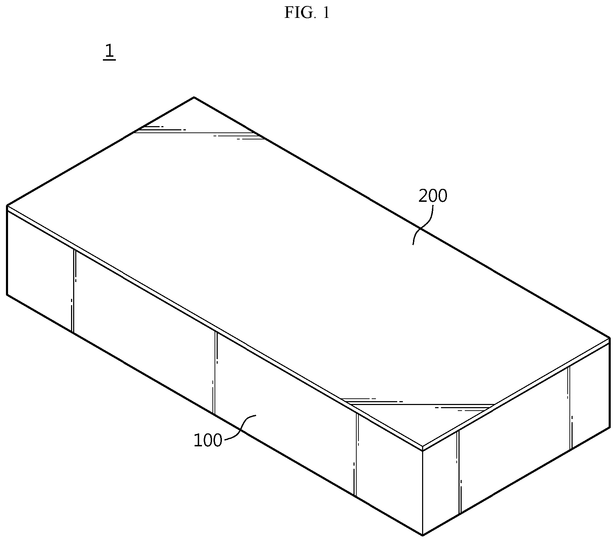

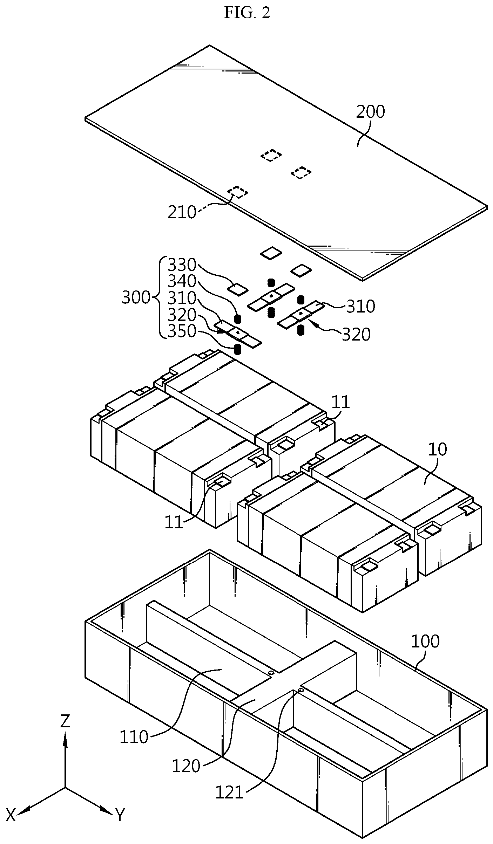

FIG. 1 is a schematic perspective view of a battery pack according to an embodiment of the present disclosure, and FIG. 2 is an exploded perspective view of the main components of the battery pack of FIG. 1.

The battery pack 1 according to this embodiment may include a plurality of battery modules 10; a pack tray 100 accommodating the battery modules 10 and having an open top; a pack cover 200 disposed on top of the pack tray 100 to hermetically seal an accommodation space in which the battery modules 10 are received; and an electrical connection disconnection portion 300 disposed between the pack tray 100 and the pack cover 200 to electrically connect and support a module connection busbar 310 connecting the battery modules 10, and separate the connection of the module connection busbar 310 to disconnect the electrical connection between the battery modules 10 when a thermal event occurs.

The battery module 10 includes a cell assembly formed by stacking battery cells and a module case accommodating the cell assembly. Here, the battery module 10 may have a plurality of upper electrodes 11 at two ends of the upper surface, and the upper electrodes 11 may be configured to electrically connect the battery module 10 to the adjacent battery module 10. Additionally, a disconnection body 320 and a pair of module connection busbars 310 may be connected between the upper electrodes 11 to establish an electrical connection between the battery modules 10.

A pack case includes the pack tray 100 accommodating the battery modules 10; and the pack cover 200 disposed on top of the pack tray 100.

The pack tray 100 is configured to protect the battery modules 10 from external impacts, and may be made of a material having high mechanical strength. As shown in FIGs. 1 and 2, the pack tray 100 may have the accommodation space 220 in which at least one battery module 10 is received and have the open top to which the pack cover 200 may be coupled. Here, the accommodation space may also refer to a space between the pack cover 200 and an upper surface of the battery module 10 after the battery module 10 is received in the pack tray 100.

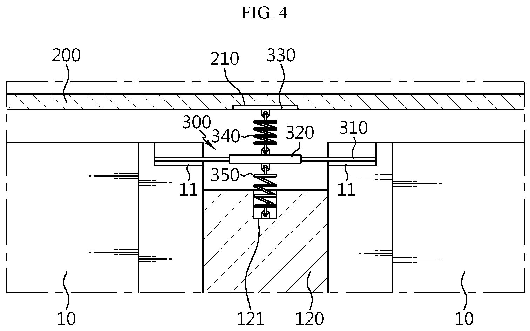

The pack tray 100 has a horizontal partition wall 110 (Y axis direction) and a vertical partition wall 120 (X axis direction) to partition the inside of the pack tray 100. Additionally, the height of the horizontal partition wall 110 and the vertical partition wall 120 is lower than the height of the battery modules 10, and is at least lower than the height at which the upper electrodes 11 are located (see FIG. 4). This is to horizontally arrange the disconnection body 320 and the module connection busbars 310 and connect them each other above the horizontal partition wall 110 and the vertical partition wall 120.

Although this embodiment shows that the pack tray 100 has one horizontal partition wall 110 along the Y axis and one vertical partition wall 120 along the X axis perpendicular to the horizontal partition wall 110 within the pack tray 100 and accommodates four battery modules 10, the scope of protection of the present disclosure is not limited to the number of horizontal partition walls 110 and vertical partition walls 120 or the number of battery modules 10 received in the pack tray 100 shown in this embodiment.

The horizontal partition wall 110 and the vertical partition wall 120 have an inward recessed groove portion 121. The inward recessed groove portion 121 is recessed along the thickness direction (-Z direction) of the pack tray 100, and one end of a second elastic member is coupled to the inward recessed groove portion 121. Additionally, the inward recessed groove portion 121 may be configured to accommodate a portion of the second elastic member 350. Accordingly, it may be possible to provide room for expansion when the second elastic member 350 expands or contracts.

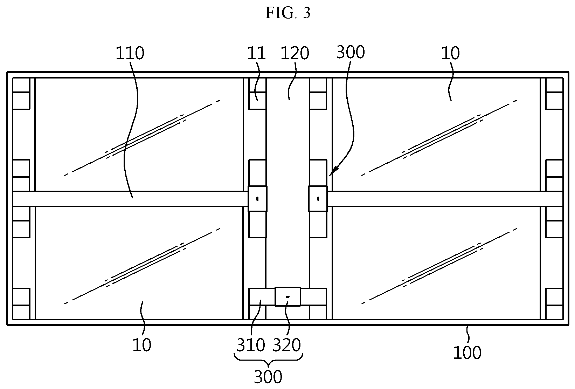

Referring primarily to FIG. 3, the horizontal partition wall 110 may have two inward recessed groove portions 121 at the central part of the pack tray 100, and the vertical partition wall 120 may have one inward recessed groove portion 121 at the upper end portion.

The pack cover 200 is disposed on top of the pack tray 100 to hermetically seal the accommodation space 220 in which the battery modules 10 are received. The pack cover 200 in this embodiment is configured to fully cover four battery modules 10, and the pack cover 200 may be made of aluminum or SUS to ensure stiffness and high conductivity.

The pack cover 200 has a plurality of accommodation grooves 210 in the lower surface. A detachable member 330 may be received in the accommodation groove 210, and the detachable member 330 may include a plurality of detachable members 330 in the lower surface of the pack cover 200 at a location corresponding to the electrical connection disconnection portion 300 of FIG. 3. The detachable member 330 may be coupled to the accommodation groove 210 by bolting and thus may be firmly secured to withstand external impacts.

The pack cover 200 and the pack tray 100 may be, for example, coupled by bolting, welding, adhesion, hooking and the like.

When a thermal event occurs due to a fire in any battery module 10, the electrical connection disconnection portion 300 is configured to disconnect the electrical connection between adjacent battery cells, thereby preventing internal short circuits of normal battery modules 10.

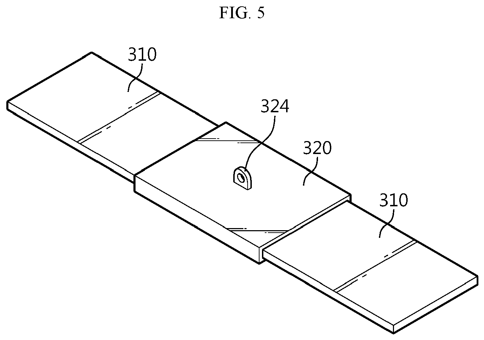

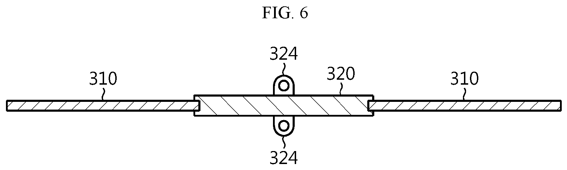

FIG. 3 is a top view of FIG. 1 in which the pack cover is removed, FIG. 4 is a vertical cross-sectional view of FIG. 3, taking along the line A-A, FIG. 5 is a schematic perspective view of the electrical connection disconnection portion including the disconnection body and the module connection busbars coupled to two sides according to an embodiment of the present disclosure, and FIG. 6 is a vertical cross-sectional view of FIG. 5, taken along a length direction.

The electrical connection disconnection portion 300 may include a disconnection body 320 to which a pair of module connection busbars 310 are connected, the detachable member 330 that is placed in the inner wall of the pack cover 200 and separated when the temperature of the pack cover 200 rises, a first elastic member 340 having one end connected to the detachable member 330 and the other end connected to the top of the disconnection body 320, and the second elastic member 350 having one end connected to the pack tray 100 and the other end connected to the bottom of the disconnection body 320.

The module connection busbar 310 may have one end electrically connected to the upper electrode 11 of the battery module 10 and the other end as a free end floating in the accommodation space, and the other end may be coupled and supported by the disconnection body 320 as described below. The disconnection body 320 and the module connection busbars 310 electrically connect the battery module 10 to its adjacent battery module 10, and accordingly one electrical connection disconnection portion 300 may have two module connection busbars 310, i.e., a pair of module connection busbars 310, each connected to the upper electrode 11 of each of two battery modules 10. This embodiment includes three electrical connection disconnection portions 300 as shown in FIG. 3.

The disconnection body 320 is disposed at the center of the pair of module connection busbars 310 and plays a role in connecting the pair of module connection busbars 310 to establish an electrical connection between the module connection busbars 310 and supporting the other end of the pair of module connection busbars 310. Referring primarily to FIGs. 5 and 6, the disconnection body 320 may be thicker than the module connection busbars 310 and has a connection ring 324 in each of the upper surface and the lower surface. Additionally, the disconnection body 320 may have a connection groove portion 321 at two sides and the module connection busbars 310 may be inserted and coupled to the connection groove portions 321. The disconnection body 320 may be made of a material having high electrical conductivity and thereby high electrical connection efficiency, and may be made of the same material as the module connection busbars 310 (for example, copper, etc.).

The detachable member 330 is disposed above the disconnection body 320. The detachable member 330 is placed in the inner wall of the pack cover 200, to be exact, the accommodation groove 210 and separated when the temperature of the pack cover 200 rises. That is, when a fire is triggered by any cell in the battery pack 1 or a thermal event occurs in the battery module 10, gases and flames are produced, leading to thermal energy accumulation and temperature rise of the pack cover 200, and when the temperature of the pack cover 200 is higher than a preset design temperature, a portion of the coupled part between the detachable member 330 and the pack cover 200 melts and the detachable member 330 separates or detaches from the pack cover 200. Accordingly, the detachable member 330 may be made of a plastic material, but may be made of any other material having a lower melting point than the pack cover 200.

The first elastic member 340 and the second elastic member 350 are disposed on the upper surface and the lower surface of the disconnection body 320, respectively. The first elastic member 340 has one end connected to the detachable member 330 and the other end connected to the top of the disconnection body 320, and the second elastic member 350 has one end connected to the pack tray 100 and the other end connected to the bottom of the disconnection body 320.

The disconnection body 320 may be located at an equilibrium height at which the elastic force of the first elastic member is equal to the elastic force of the second elastic member 350 in the accommodation space, and at the equilibrium height, the module connection busbars 310 may electrically connect the battery modules 10. That is, as shown in FIG. 4, the elastic force of the first elastic member and the second elastic member is adjusted to achieve the equilibrium height when the pair of module connection busbars 310 are connected to the upper electrodes 11 of the battery modules 10.

Accordingly, when the detachable member 330 is separated from the pack cover 200, as the disconnection body 320 moves by the elastic force of the second elastic member, the pair of module connection busbars 310 may be separated and insulated from each other, thereby disconnecting the electrical connection between the battery modules 10.

According to this exemplary configuration, when a thermal event occurs due to a fire in any battery module 10, it may be possible to disconnect the electrical connection between adjacent other battery cells, thereby preventing internal short circuits of normal battery modules 10, preventing heat propagation that causes the fire to spread all over the battery pack 1 and contributing to the suppression of thermal propagation (TP).

Additionally, it may be possible to prevent fire propagation between the battery modules 10, thereby enhancing durability of the battery pack 1 and reducing the maintenance and repair cost. Additionally, with the simpler configuration design, in the event of fire in the pack, it may be possible to prevent electrical short circuits between the battery modules 10 and prevent explosive fire spread across the battery modules 10, thereby regulating explosive accumulation of thermal energy in the battery pack 1 and preventing structure collapse of the battery pack 1.

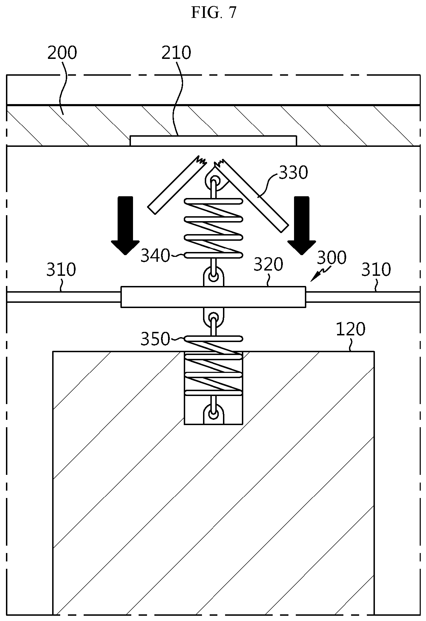

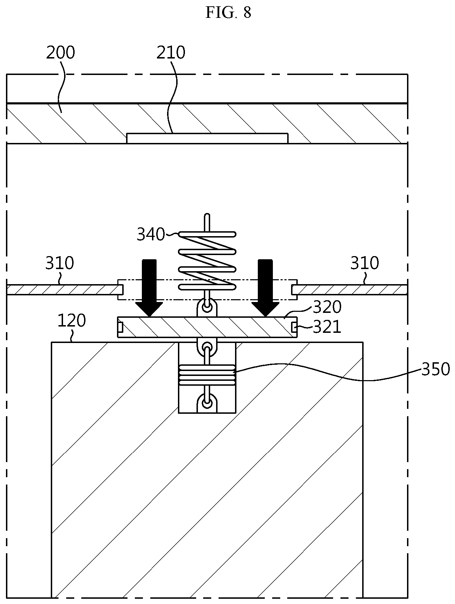

FIG. 7 is a diagram showing the separation of the detachable member in the electrical connection disconnection portion of the battery pack according to an embodiment of the present disclosure, and FIG. 8 is a diagram showing the disconnection body separated from the module connection busbars in the electrical connection disconnection portion of the battery pack according to an embodiment of the present disclosure.

First, in normal condition in which there is no thermal problem, the electrical connection disconnection portion 300 in the battery pack 1 does not work. That is, as shown in FIG. 4, the disconnection body 320 is located at the equilibrium height at which the elastic force of the first elastic member is equal to the elastic force of the second elastic member 350 in the accommodation space, and the module connection busbars 310 electrically connect the battery modules 10 at the equilibrium height.

Subsequently, when a fire is triggered by any cell in the battery pack 1 or a thermal event occurs in the battery module 10, gases and flames are produced and the internal pressure rises, leading to accumulation of thermal energy and temperature rise of the pack cover 200, and the pack cover 200 having high thermal conductivity is prone to propagation of the temperature rise. Additionally, when the propagated temperature is higher than the design temperature, a portion of the coupled part between the detachable member 330 and the pack cover 200 melts and the detachable member 330 is separated from the pack cover 200 as shown in FIG. 7. FIG. 7 shows that the first elastic member loses the elastic force, and the second elastic member 350 maintains the elastic force.

Subsequently, when the detachable member 330 is separated from the pack cover 200, the disconnection body 320 moves down by the elastic force of the second elastic member. That is, when the detachable member 330 is separated from the pack cover 200, as the disconnection body 320 moves by the elastic force of the second elastic member, the electrical connection between the battery modules is disconnected.

In this instance, the elastic recovery of the second elastic member 350 is greater than the coupling strength of the module connection busbars 310 coupled to the connection groove portions 321 of the disconnection body 320, and accordingly the disconnection body 320 disengages from the module connection busbars 310 and slidably moves down. Although FIG. 8 shows that the shape of the connection groove portions 321 is maintained, the connection groove portions 321 may be partially damaged or deformed when the disconnection body 320 is separated from the module connection busbars 310.

Additionally, due to the inward recessed groove portion 121 in the vertical partition wall 120, the second elastic member 350 is completely received in the inward recessed groove portion 121 when it shrinks and the disconnection body 320 is practically seated on the upper surface of the vertical partition wall 120 when it moves down, thereby completely disconnecting or insulating the pair of module connection busbars 310.

Accordingly, when a thermal event occurs due to due to a fire in any battery module 10, it may be possible to prevent electrical connection between adjacent other battery cells, thereby preventing internal short circuits of normal battery modules 10 and preventing heat propagation that causes the fire to spread all over the battery pack 1. Additionally, it may be possible to prevent fire propagation between the battery modules 10, thereby enhancing durability of the battery pack 1 and reducing the maintenance and repair cost.

Additionally, with the simpler configuration design, in the event of fire in the pack, it may be possible to prevent electrical short circuits between the battery modules 10 and prevent explosive fire spread across the battery modules 10, thereby regulating explosive accumulation of thermal energy in the battery pack 1, preventing structure collapse of the battery pack 1 and contributing to the suppression of thermal propagation (TP).

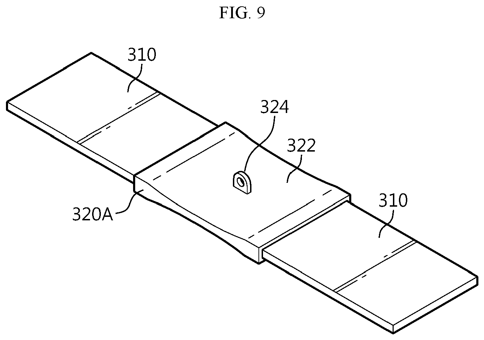

Subsequently, other embodiments of the battery module 10 of the present disclosure will be briefly described with reference to FIGs. 9 to 11.

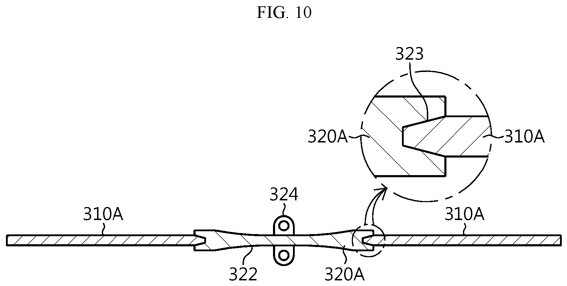

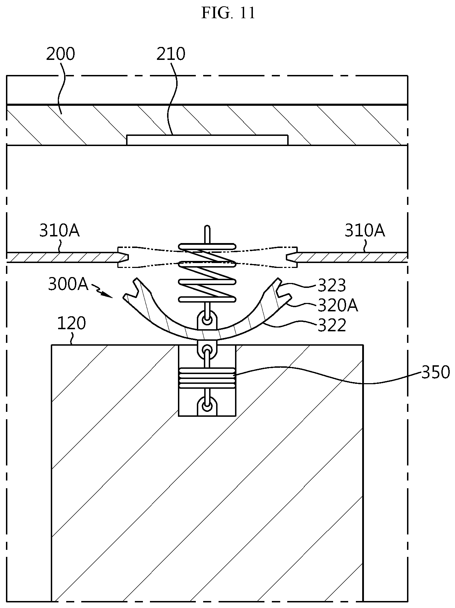

FIG. 9 is a schematic perspective view of the disconnection body according to another embodiment of the present disclosure, FIG. 10 is a vertical cross-sectional view of FIG. 9, and FIG. 11 is a diagram showing the disconnection body separated from the module connection busbars according to another embodiment of the present disclosure.

The same reference number as the previous drawings indicates the same element, and redundant description of the same element is omitted and difference(s) between this embodiment and the above-described embodiment will be described.

When compared with the above-described embodiment, the battery module 10 according to another embodiment of the present disclosure has an additional configuration in the disconnection body 320A.

The disconnection body 320A may have a concave groove portion 322 rounded inward along the thickness direction in each of the upper surface and the lower surface. This is to reduce the thickness of the disconnection body 320A to induce more flexible deformation when the electrical connection disconnection portion 300A works, thereby easily separating the disconnection body 320A from the module connection busbars 310A.

Additionally, the inner walls of the connection groove portions 321 may have tapered portions 323 such that the inner diameter increases from the center to two ends of the disconnection body 320A. The module connection busbars 310A may have tapered surfaces corresponding to the tapered portions 323. Through the tapered portions 323, a smaller force than the first embodiment is required for the disconnection body 320A to separate from the module connection busbars 310A and move down, which makes it easier to perform the electrical connection disconnection function. As shown in FIG. 11, the disconnection body 320 warps due to the concave groove portions 322 and easily separates from the module connection busbars 310A by the tapered portions 323.

Accordingly, when a thermal event occurs due to a fire in any battery module 10, it may be possible to disconnect the electrical connection between adjacent other battery cells, thereby preventing internal short circuits of normal battery modules 10 and preventing heat propagation that causes the fire to spread all over the battery pack 1. Additionally, it may be possible to prevent fire propagation between the battery modules 10, thereby enhancing durability of the battery pack 1, reducing the maintenance and repair cost and contributing to the suppression of thermal propagation (TP).

Additionally, with the simpler configuration design, in the event of fire in the pack, it may be possible to prevent electrical short circuits between the battery modules 10 and prevent explosive fire spread across the battery modules 10, thereby regulating explosive accumulation of thermal energy in the battery pack 1 and preventing structure collapse of the battery pack 1.

Although not shown, the battery pack 1 according to the present disclosure may further include various types of devices to control the charge/discharge of the battery modules 10, for example, a Battery Management System (BMS), a current sensor, a fuse, etc.

The battery pack 1 according to the present disclosure may be applied to a vehicle such as an electric vehicle or a hybrid electric vehicle. That is, the vehicle according to the present disclosure may include the battery pack 1 according to the present disclosure. The battery pack 1 may be installed at a car frame under the car seat or a trunk space, and placed in the reverse order, if necessary, when installed at the vehicle.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

## Claims

1. A battery pack, comprising:
a plurality of battery modules;
a pack tray accommodating the battery modules and having an open top;
a pack cover disposed on top of the pack tray to hermetically seal an accommodation space in which the battery modules are received; and
an electrical connection disconnection portion disposed between the pack tray and the pack cover to be configured to electrically connect and support a module connection busbar connecting the battery modules, and separate the connection of the module connection busbar to disconnect the electrical connection between the battery modules when a thermal event occurs.

2. The battery pack according to claim 1, wherein the electrical connection disconnection portion further includes:
a disconnection body to which a pair of module connection busbars are connected;
a detachable member that is placed in an inner wall of the pack cover and separated when the thermal event occurs;
a first elastic member having one end connected to the detachable member and the other end connected to a top of the disconnection body; and
a second elastic member having one end connected to the pack tray and the other end connected to a bottom of the disconnection body.

3. The battery pack according to claim 2, wherein the disconnection body is located at an equilibrium height at which an elastic force of the first elastic member is equal to an elastic force of the second elastic member in the accommodation space, and
wherein the module connection busbars electrically connect the battery modules at the equilibrium height.

4. The battery pack according to claim 3, wherein the detachable member melts and separates from the pack cover when a temperature of the pack cover rises.

5. The battery pack according to claim 3, wherein upon separation of the detachable member from the pack cover, as the second elastic member is compressed and the disconnection body moves, the electrical connection between the battery modules is disconnected.

6. The battery pack according to claim 2, wherein the pack tray has a horizontal partition wall and a vertical partition wall to partition an inside of the pack tray, and
wherein the horizontal partition wall and the vertical partition wall have an inward recessed groove portion to which one end of the second elastic member is coupled.

7. The battery pack according to claim 2, wherein the detachable member is made of a plastic material.

8. The battery pack according to claim 2, wherein the disconnection body is thicker than the module connection busbars.

9. The battery pack according to claim 8, wherein the disconnection body has a connection groove portion at two sides.

10. The battery pack according to claim 2, wherein the inner wall of the pack cover has an accommodation groove in which the detachable member is received.

11. The battery pack according to claim 9, wherein the disconnection body has a concave groove portion rounded inward along a thickness direction in each of an upper surface and a lower surface.

12. The battery pack according to claim 11, wherein an inner wall of the connection groove portions has a tapered portion such that an inner diameter increases from a center to two ends of the disconnection body.

13. A vehicle comprising the battery pack according to any one of claims 1 to 12.
